# EUROPÄISCHE PATENTSCHRIFT

(11) **EP 3 123 222 B1**
(45) Veröffentlichungstag und Bekanntmachung des Hinweises auf die Patenterteilung: **07.10.2020**
(21) Anmeldenummer: 15735621.3
(22) Anmeldetag: 23.03.2015
(51) Int. Cl.: G02B 6/42, H04B 10/80

(54) **VORRICHTUNG ZUM EINKOPPELN UND/ODER AUSKOPPELN OPTISCHER SIGNALE**
DEVICE FOR COUPLING AND/OR DECOUPLING OPTICAL SIGNALS
DISPOSITIF D'INJECTION ET/OU DE SORTIE DE SIGNAUX OPTIQUES

(30) Priorität: 22.03.2014 DE 102014205373
(43) Veröffentlichungstag der Anmeldung: 01.02.2017
(73) Patentinhaber: Silicon Line GmbH, 80687 München (DE)
(72) Erfinder: HOELTKE, Holger, 80995 Muenchen (DE); GROEPL, Martin, 87527 Sonthofen Oberallgaeu (DE)
(74) Vertreter: Hofmann, Andreas
(86) Internationale Anmeldenummer: PCT/DE2015/100121
(87) Internationale Veröffentlichungsnummer: WO 2015/144136

(56) Entgegenhaltungen:
- WO-A1-2012/176409
- JP-A- 2012 198 451
- US-A1- 2013 084 043
- US-B1- 6 456 766

## Beschreibung

### Technisches Gebiet

Die vorliegende Erfindung betrifft grundsätzlich das technische Gebiet der optischen Unterbaugruppen oder der optischen Sub-Assemblys (OSA).

Im Spezielleren betrifft die vorliegende Erfindung eine Vorrichtung zum Einkoppeln optischer Signale in mindestens einen Wellenleiter gemäß dem Oberbegriff des Anspruchs 1 und des Weiteren eine komplementäre Vorrichtung zum Auskoppeln optischer Signale aus mindestens einem Wellenleiter gemäß dem Oberbegriff des Anspruchs 2.

Des Weiteren betrifft die vorliegende Erfindung ein Verfahren zum Herstellen einer derartigen Vorrichtung zum Ein-/Auskoppeln optischer Signale in/aus mindestens einen/m Wellenleiter.

### Stand der Technik, insbesondere dessen Nachteile und technische Probleme

Vertical Cavity Surface Emitting Lasers (VCSEL) bzw. Fotodioden (PD) senden bzw. empfangen als optische Wandler, insbesondere als aktiv-optische Wandler, optische Signale im Wesentlichen senkrecht zu ihrer Oberfläche.

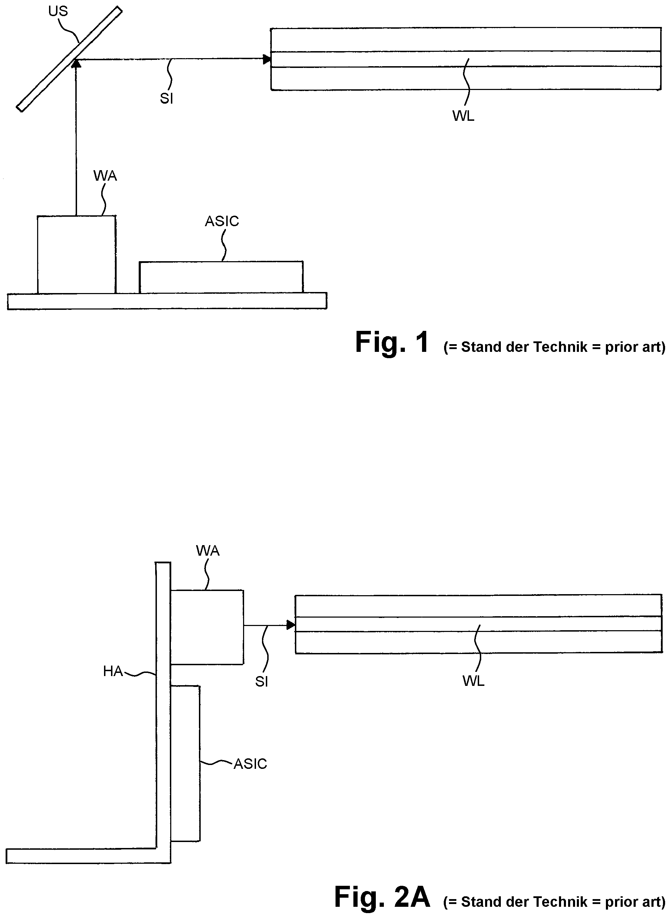

Um derartige optischen Signale SI in einen optischen Wellenleiter WL einzukoppeln bzw. aus einem optischen Wellenleiter WL auszukoppeln, sind die optischen Signale SI über einen 45 Grad-Umlenkspiegel US aus der Sende- bzw. Empfangsrichtung des optischen Wandlers WA in eine um neunzig Grad versetzte Ebene des Wellenleiters WL umzulenken, wie Fig. 1 entnehmbar.

So beschreibt die Druckschrift DE 10 2012 005 618 A1 ein aktives optisches Kabel, dessen Fasern stoffschlüssig an einem optischen Substrat befestigt sind. Die Fasern koppeln hierbei an einen integrierten optischen Wellenleiter. Ein Umlenkelement leitet den Freistrahl zur auf der Oberfläche des Substrats angeordneten Prozesseinheit, wobei der Freistrahl eine Richtungsänderung von neunzig Grad erfährt, um den Freistrahl in eine Sende-/Empfangseinheit zu lenken.

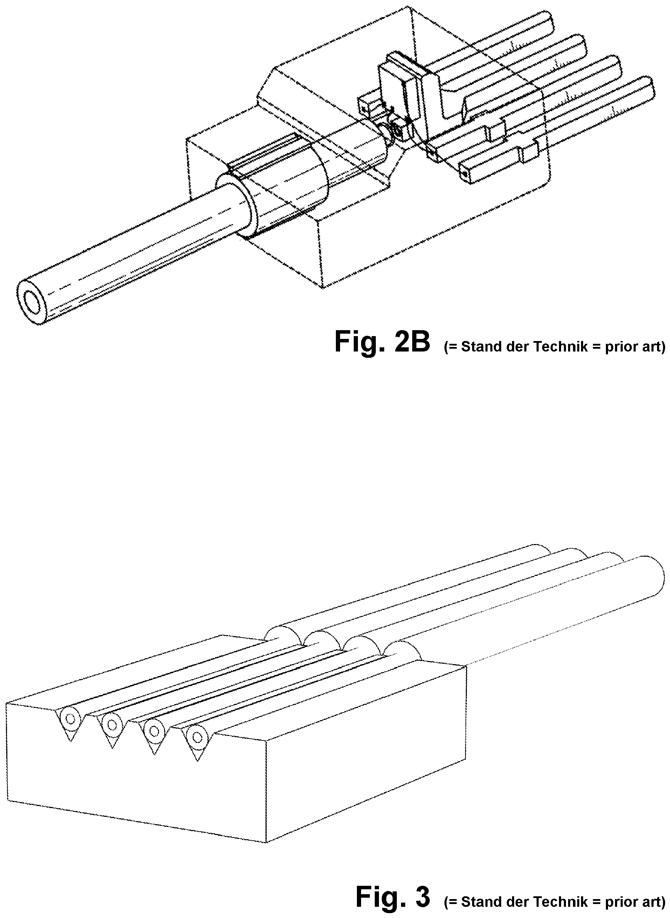

Alternativ lassen sich optische Wandler WA mittels einer entsprechenden Halterung HA so anordnen, dass ihre Sende- bzw. Empfangsrichtung der Ebene des Wellenleiters WL entspricht, wie Fig. 2A und Fig. 2B entnehmbar.

Nachteilig ist bei den aus dem Stand der Technik bekannten Lösungen, dass die Ausrichtung (sogenanntes Alignment) der optischen Achse zwischen dem Wellenleiter (= der optischen Faser) und dem optischen Wandler vielfach aktiv zu erfolgen hat.

Alternativ zum aktiven Ausrichten der optischen Faser besteht konventionellerweise die Möglichkeit, optische Fasern mittels sogenannter V-Grooves zum (mindestens einen) optischen Wandler auszurichten (vgl. Fig. 3).

Problematisch ist auch die Baugröße der bekannten Ein- und Auskoppelvorrichtungen. Aufgrund dieser Baugröße und Bauform eignen sich die bekannten Lösungen nicht zur Realisierung von Applikationen im Heim- und Mobilelektronikbereich. Dies impliziert längere Verbindungswege zwischen den Bauteilen und folglich längere Latenzzeiten.

Darüber hinaus ist der Herstellungsaufwand für die aus dem Stand der Technik bekannten Lösungen hoch und kostenintensiv.

Zum relevanten Stand der Technik wird auf die US 6 456 766 B1, auf die US 2013/0840043 A1, auf die JP 2012-198451 A oder auf die WO 2012/176409 A1 aufmerksam gemacht.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Vorrichtung gemäß dem Oberbegriff des Anspruchs 1 sowie eine Vorrichtung gemäß dem Oberbegriff des Anspruchs 2 so weiterzubilden, dass ein aktives Ausrichten des Wellenleiters nicht erforderlich ist; des Weiteren soll eine entsprechende Miniaturisierung der Ein- und Auskoppelvorrichtung bei geringen optischen Verlusten ermöglicht werden und gleichzeitig der Aufwand in der Herstellung gering sein.

Diese Aufgabe wird durch eine Vorrichtung mit den Merkmalen des Anspruchs 1 sowie durch eine Vorrichtung mit den Merkmalen des Anspruchs 2 gelöst, insbesondere durch eine miniaturisierte sowie modularisierte aktiv-optische Sendeeinheit und/oder durch eine miniaturisierte sowie modularisierte aktiv-optische Empfangseinheit, die mittels eines Verfahrens mit den Merkmalen des Anspruchs 14 herstellbar ist. Vorteilhafte Ausgestaltungen und zweckmäßige Weiterbildungen der vorliegenden Erfindung sind in den jeweiligen Unteransprüchen gekennzeichnet.

Bei der vorliegenden Erfindung ist mindestens ein Wandler, der
- als mindestens ein elektro-optischer Wandler, insbesondere als mindestens ein vertikal strahlender Laser (VCSEL = Vertical Cavity Surface Emitting Laser), oder
- als mindestens ein opto-elektrischer Wandler, insbesondere als mindestens ein Fotodiode (PD = Photo Diode), ausgebildet sein kann, so angeordnet, dass seine Sende- bzw. Empfangsrichtung der der Wellenleiterebene entspricht.

Hierzu wird mittels eines geeigneten Herstellungsverfahrens eine, insbesondere aus mindestens einem optisch transparenten oder optisch teiltransparenten Medium, zum Beispiel aus mindestens einem Polymer, gefertigte optische Unterbaugruppe (sogenanntes optisches Sub-Assembly oder OSA) geformt, das zum einem ausschließlich den oder die Wandler in vorzugsweise optisch transparentem Material aufnimmt und zum anderen die präzise direkte Ausrichtung der optischen Achse des Wandlers zur optischen Achse der optischen Faser ohne Ferrule, blanke Faser (sogenannte bare fiber) und ohne Linse übernimmt.

Diese Anforderungen an das optische Sub-Assembly werden durch die Anordnung der Elemente im optischen Sub-Assembly und durch die Formgebung des optischen Sub-Assemblys erreicht.

Das Herstellungsverfahren kann ein dreidimensionales mikro-stereolithografisches Druckverfahren sein, das während des Drucks den Wandler in das vorzugsweise optisch transparente Material, zum Beispiel in ein optisch transparentes Polymer, einbettet.

Dieses Herstellungsverfahren erlaubt neben der Einbettung der Wandler, der Anordnung der Elemente und der präzisen Formgebung des optisch transparenten Materials auch die metallische Kontaktierung der Anschlusskontakte, zum Beispiel der Anode und der Kathode, der jeweils eingebetteten Wandler. Hierbei kann die optische Faser oder der Wellenleiter, insbesondere in der Ebene des Substrats, koaxial zu einem an den Anschlusskontakten befestigbaren Peripheriekabel oder Peripheriekontakt ausgerichtet sein.

Dies kann besonders für den Aufbau von aktiven optisch Kabeln (AOC oder active optical cable) von Bedeutung sein.

Gemäß einer bevorzugten Ausführungsform der vorliegenden Erfindung kann die Vorrichtung ein umschließendes Gehäuse aufweisen, durch das die Vorrichtung vor äußeren Einflüssen schützbar ist. Dies ist besonders für den Gebrauch als aktives optisches Kabel von Bedeutung, zumal das Gehäuse dann als Stecker mit einem Mechanismus zur Fixierung an Peripheriegeräten eingesetzt werden kann.

Mit dem vorgenannten Herstellungsverfahren ist es möglich, zeitgleich tausende derartige optische Sub-Assemblys bei Anordnung in einem linearen zweidimensionalen Muster auf zum Beispiel einem Glasträger herzustellen, wodurch eine sehr günstige Kostenstruktur für diese optischen Sub-Assemblys gewährleistet ist.

Obwohl eine derartige technische Lösung die optische Faser, insbesondere die Glasfaser, oder den Wellenleiter sehr kosteneffizient mit dem Wandler verbindet, lässt sich das Einführen der optischen Faser oder des Wellenleiters in den Führungskanal nur schwer automatisieren.

Um nun gute Resultate beim Einkoppeln von Licht vom elektro-optischen Wandler in die optische Faser bzw. beim Auskoppeln von Licht aus der optischen Faser in den opto-elektrischen Wandler zu erzielen, ist der Innendurchmesser des Führungskanals nur unwesentlich größer als der Außendurchmesser der optischen Faser. Der Unterschied dieser beiden Durchmesser ist typischerweise gleich oder kleiner als etwa zehn Mikrometer.

Konventionelle Platzierungsautomaten oder Platzierungsmaschinen erreichen zwar diese Genauigkeit, sind jedoch in diesem Fall sehr teuer und erreichen nur langsame Prozessgeschwindigkeiten beim Einführen der optischen Faser oder des Wellenleiters in den Führungskanal.

Deutlich kostengünstigere Platzierungsautomaten oder Platzierungsmaschinen erreichen typischerweise nur eine Genauigkeit von etwa fünfzig Mikrometern bis etwa zweihundert Mikrometern. Um nun ein hochpräzises Ausrichten der optischen Achse der optischen Faser oder des Wellenleiters zur optischen Achse des Wandlers mittels eines kostengünstigen Platzierungsautomaten oder mittels einer kostengünstigen Platzierungsmaschine zu gewährleisten, wird dem optischen Sub-Assembly (OSA) erfindungsgemäß mindestens eine Erweiterung, insbesondere mindestens eine nut- oder trog- oder wannenförmige Erweiterung, zum Beispiel mindestens ein Wellenleitertrog oder mindestens eine Faserwanne, angefügt.

Gemäß einer bevorzugten Ausführungsform kann diese Erweiterung aus einem optisch zumindest teiltransparenten Medium, insbesondere aus mindestens einem Polymer, gefertigt sein.

Unabhängig hiervon oder in Verbindung hiermit kann der Boden dieser Erweiterung vorzugsweise kreisrund geformt sein. Eine derartige kreisrunde Formung kann vorzugsweise den gleichen Durchmesser wie der eigentliche Führungskanal aufweisen. Durch ein nahtloses und stufenloses Anschließen der Erweiterung an den Führungskanal wird ermöglicht, dass eine in die Erweiterung eingelegte optische Faser durch einfaches Vorwärtsschieben präzise in den Führungskanal gleitet.

Der rundum geschlossene Führungskanal hält das Ende der optischen Faser oder des Wellenleiters in einer exakt ausgerichteten Position zum in der optischen Unterbaugruppe oder im optischen Sub-Assembly (OSA) eingebetteten Wandler, ohne dass zusätzliche Fixiermaßnahmen, wie beispielsweise Klebstoff, notwendig sind.

Mit der Erweiterung und dem in der optischen Unterbaugruppe (OSA) enthaltenen Führungskanal entsteht ein neuartiges Faserausrichtungselement, mittels dessen es möglich ist, die optische Faser oder den Wellenleiter maschinell sowie automatisch und kostengünstig in den Führungskanal einzuführen, zum Beispiel mittels eines Platzierungsautomaten bzw. mittels einer Platzierungsmaschine, der bzw. die eine Genauigkeit von lediglich etwa fünfzig Mikrometern bis etwa zweihundert Mikrometern erreicht.

Die Erweiterung ermöglicht es, die Ungenauigkeiten derartiger kostengünstiger Platzierungsautomaten oder Platzierungsmaschinen mit den Anforderungen an eine präzise Ausrichtung der optischen Achse des Wandlers zur optischen Achse der optischen Faser oder des Wellenleiters zu vereinbaren.

Durch die erfindungsgemäße Erweiterung nach oben ist ein einfaches und toleranzbehaftetes Einlegen der optischen Faser oder des Wellenleiters in Bezug auf den Wandler möglich. Sobald die optische Faser oder der Wellenleiter auf dem Boden der Erweiterung aufliegt, reicht ein einfaches Vorwärtsschieben der optischen Faser oder des Wellenleiters hinein in den Führungskanal aus, um die optische Kopplung zwischen dem im OSA eingebetteten Wandler und der optischen Faser zu erreichen.

Die als Faserausrichtungselement ausgebildete Erweiterung gemäß der vorliegenden Erfindung ermöglicht also ein hochpräzises Ausrichten der optischen Achse der optischen Faser oder des Wellenleiters zur optischen Achse des Wandlers mittels eines kostengünstigen Platzierungsautomaten oder mittels einer kostengünstigen Platzierungsmaschine.

Die als Faserausrichtungselement ausgebildete Erweiterung gemäß der vorliegenden Erfindung ermöglicht also den Einsatz eines Platzierungsautomaten oder einer Platzierungsmaschine, der bzw. die beispielsweise nur eine Platzierungsgenauigkeit von Elementen in der Größenordnung von etwa zweihundert Mikrometern erreicht, dafür jedoch eine sehr schnelle Prozessgeschwindigkeit.

Gemäß einer zweckmäßigen Ausgestaltungsform der vorliegenden Erfindung kann auch eine Mehrkanal-Anordnung realisiert sein, die mehrere im Wesentlichen parallel zueinander angeordnete Führungskanäle aufweist. Jedem dieser Führungskanäle kann eine Erweiterung gemäß der vorliegenden Erfindung zugeordnet sein.

Die vorliegende Erfindung betrifft schließlich die Einbettung mindestens eines elektro-optischen Wandlers, insbesondere mindestens eines vertikal strahlenden Lasers (VCSEL = Vertical Cavity Surface Emitting Laser), bzw. mindestens eines opto-elektrischen Wandlers, insbesondere mindestens einer Fotodiode (PD = Photo Diode), in einem optisch transparenten Material, das in Verbindung mit der mindestens einen Erweiterung, insbesondere in Verbindung mit der mindestens einen nut- oder trog- oder wannenartigen Erweiterung, zum Beispiel in Verbindung mit dem mindestens einen Wellenleitertrog oder in Verbindung mit der mindestens einen Faserwanne, zur mechanischen Führung und Ausrichtung mindestens einer optischen Faser oder mindestens eines Wellenleiters zu diesen Wandlern dienen kann.

Die zum Einkoppeln bzw. Auskoppeln optischer Signale vorgeschlagene Vorrichtung kann als optisches Sub-Assembly (OSA = optical sub-assembly) oder mechanische Aufnahme bezeichnet werden und lässt sich in vielen Anwendungsbereichen gewinnbringend einsetzen, in erster Linie zur schnellen Signalübertragung zwischen zwei Komponenten mit elektrischer Signalführung.

So betrifft die vorliegende Erfindung vor allem die Verwendung zum Aufbau von, insbesondere steckbaren, aktiven optischen Kabeln zur schnellen und verlustarmen Signalumwandlung sowie Datenübertragung auf sehr kleinem Raum, um die elektrisch prozessierten Daten schnell an die verschiedenen Einheiten weiterzuleiten. Die extrem kurzen Leitungswege innerhalb der Vorrichtung ermöglichen sehr kurze Latenzzeiten.

Erfindungsgemäß erlaubt die Modularisierung der Erweiterung einen extrem hohen Automatisierungsgrad in der Fertigung. Durch den getrennten Aufbau des Substrats mit ASIC, der optischen Unterbaugruppe mit eingebettetem elektro-optischem und/oder opto-elektrischem Wandler, insbesondere mit eingebettetem elektro-optischem Sender und/oder mit eingebettetem opto-elektrischem Empfänger, der Erweiterung und der fest verbundenen Faser ist eine getrennte Weiterverarbeitung der Komponenten möglich.

Beispielsweise kann das Substrat mit ASIC in einem automatisierten "Pick and Place"-Prozess per Maschine auf einer Leiterplatte bestückt und schwallgelötet werden, währenddessen die optische Unterbaugruppe mit der meist hitzeempfindlichen Faser in einem späteren Prozessschritt zugeordnet werden kann.

Die Erweiterung, insbesondere die nut- oder trog- oder wannenförmige Erweiterung, zum Beispiel der Wellenleitertrog oder die Faserwanne, übernimmt als Faserausrichtungselement die mechanische Führung und Ausrichtung der einen oder mehreren optischen Fasern zu dem einen oder mehreren elektro-optischen Wandlern, insbesondere zu dem einen oder mehreren vertikal strahlenden Lasern (VCSEL), bzw. zu dem einen oder mehreren opto-elektrischen Wandlern, insbesondere zu der einen oder mehreren Fotodioden (PD).

Ebenso denkbar ist die Verwendung als steckbares aktives optisches Kabel, um Peripheriegeräte anzuschließen, wobei das Kabel in seinen Stecker-Enden die Signalverarbeitung der elektrischen Eingangs- bzw. Ausgangsignale vornimmt, des Weiteren die Wandlung von elektrischen Signalen in optische Signale bzw. von optischen Signalen in elektrische Signale mittels elektro-optischer bzw. opto-elektrischer Wandler übernimmt sowie die Ein- bzw. Auskopplung des optischen Signals in den Wellenleiter bzw. aus dem Wellenleiter sicherstellt.

Hierbei können auch bidirektionale Kabel, insbesondere wenn Sende- und Empfangskomponente in einem Aufnehm-/Ausrichtmodul integriert sind, oder laufrichtungsunabhängige Kabel, wenn der elektro-optische Wandler zugleich auch ein opto-elektrischer Wandler ist, zur Verfügung gestellt werden.

Darüber hinaus lässt sich ein neuartiger Aufbau eines miniaturisierten elektro-optischen Senders und/oder eines miniaturisierten opto-elektrischen Empfängers mit an der optischen Unterbaugruppe oder am optischen Sub-Assembly (OSA) fest verbundenem optischem Wellenleiter zur Übertragung von elektrischen Signalen über einen solchen optischen Wellenleiter mit dieser Vorrichtung realisieren.

Die vorliegende Erfindung zeichnet sich durch einen hohen Miniaturisierungsgrad aus, der auf die erfindungsgemäße Art der Positionierung, Modularisierung und Integrierung der Komponenten zurückzuführen ist. Dies ermöglicht den Aufbau eines aktiven optischen Kabels oder A[ctive]O[ptical]C[able]s mit mindestens einer derartigen miniaturisierten optischen Unterbaugruppe oder mit mindestens einem derartigen miniaturisierten optischen Sub-Assembly (OSA).

Der Aufbau eines derartigen extrem kleinen, miniaturisierten optischen Sub-Assemblys ermöglicht wiederum den Aufbau eines miniaturisierten elektro-optischen Senders oder eines miniaturisierten opto-elektrischen Empfängers, jeweils mit verbundenem optischem Wellenleiter oder mit verbundener optischer Faser, wobei die mit dem optischen Sub-Assembly verbundene optische Faser durch dieses optische Sub-Assembly, insbesondere durch den im optischen Sub-Assembly eingearbeiteten Führungskanal, geführt und ausgerichtet wird.

Durch die mittels der Erweiterung, insbesondere mittels der nut- oder trog- oder wannenartigen Erweiterung, zum Beispiel mittels des Wellenleitertrogs oder mittels der Faserwanne, realisierte direkte Integration des Wellenleiters in die optische Unterbaugruppe, insbesondere durch den Einsatz transparenter Medien für die Fertigung der optischen Unterbaugruppe und/oder der Erweiterung, lassen sich sehr kurze Signalverbindungslängen, zum Beispiel Bonddrahtlängen, erzielen, was insbesondere bei sehr hohen Datenübertragungsraten zum Erhalt der Signalqualität beiträgt und die Latenzzeiten reduziert.

Ebenso lassen sich durch die Modularisierung gemäß der vorliegenden Erfindung erhebliche Kosten in der Produktion, zum Beispiel durch einen höheren Automatisierungsgrad, einsparen.

### Kurze Beschreibung der Zeichnungen

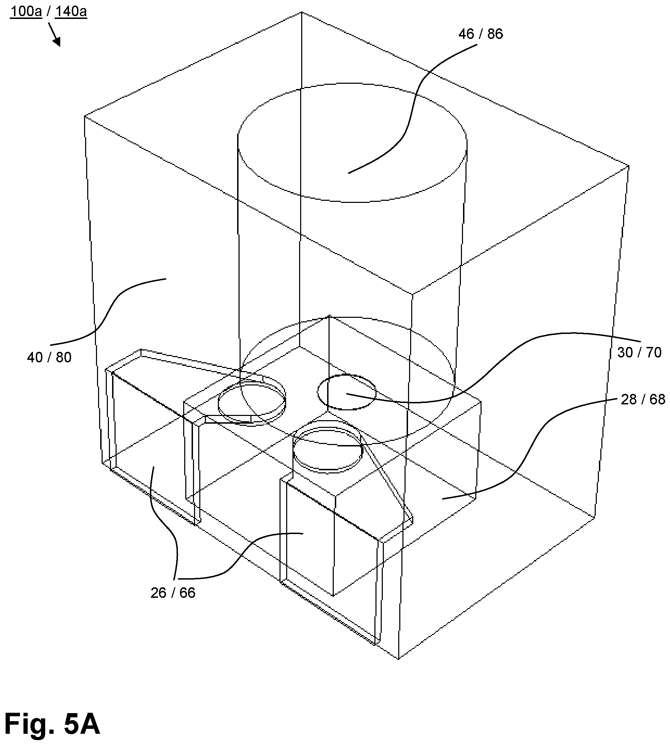

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 2 nachgeordneten Ansprüche verwiesen, andererseits werden weitere Ausgestaltungen, Merkmale und Vorteile der vorliegenden Erfindung nachstehend unter anderem anhand der durch Fig. 5A bis Fig. 11C veranschaulichten sieben Ausführungsbeispiele näher erläutert.

Es zeigt:
- Fig. 1: in konzeptuell-schematischer Darstellung eine Vorrichtung aus dem Stand der Technik, mittels derer optische Signale unter einem Winkel von neunzig Grad zur Emissionsrichtung einkoppelbar sind;
- Fig. 2A: in konzeptuell-schematischer Darstellung eine Vorrichtung aus dem Stand der Technik, mittels derer optische Signale mittels einer L-Halterung in zum Wellenleiter axialer Richtung einkoppelbar sind;
- Fig. 2B: in perspektivischer Darstellung ein Beispiel für die Realisierung einer für einen Wellenleiter vorgesehenen Ein- bzw. Auskoppelvorrichtung aus dem Stand der Technik;
- Fig. 3: in perspektivischer Darstellung ein Beispiel für die Realisierung einer für vier Wellenleiter vorgesehenen Ein- bzw. Auskoppelvorrichtung aus dem Stand der Technik;
- Fig. 4: in perspektivischer Darstellung ein Übersichtsbeispiel für eine optische Unterbaugruppe oder für ein optisches Sub-Assembly (OSA) mit eingebettetem Wandler, wobei die optische Faser oder der Wellenleiter im Führungskanal des OSA bis hin zum Wandler eingeschoben ist;
- Fig. 5A: in perspektivischer Darstellung ein erstes Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 5B: in seitlicher Schnittansicht die optische Unterbaugruppe oder das optische Sub-Assembly (OSA) aus Fig. 5A mit in den Führungskanal eingesetzter/m optischer Faser oder Wellenleiter;
- Fig. 6: in perspektivischer Darstellung ein zweites Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 7: in perspektivischer Darstellung ein drittes Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 8: in perspektivischer Darstellung ein viertes Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 9: in perspektivischer Darstellung ein fünftes Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 10: in perspektivischer Darstellung ein sechstes Detailbeispiel für eine optische Unterbaugruppe oder für ein optisches Sub-Assembly (OSA) mit eingebettetem Wandler, wobei die optische Faser oder der Wellenleiter mittels eines in Fig. 11A gezeigten Ausführungsbeispiels für eine Erweiterung gemäß der vorliegenden Erfindung bis hin zum Wandler in den Führungskanal des OSA einschiebbar ist;
- Fig. 11A: in perspektivischer Darstellung ein siebtes Detailbeispiel für eine optische Unterbaugruppe oder für ein optisches Sub-Assembly (OSA) mit eingebettetem Wandler, wobei die optische Faser oder der Wellenleiter mittels eines Ausführungsbeispiels für eine Erweiterung gemäß der vorliegenden Erfindung bis hin zum Wandler in den Führungskanal des OSA einschiebbar ist;
- Fig. 11B: in perspektivischer Darstellung die optische Unterbaugruppe oder das optische Sub-Assembly (OSA) aus Fig. 11A mit über die Erweiterung in den Führungskanal eingesetzter/m optischer Faser oder Wellenleiter;
- Fig. 11C: in leicht perspektivischer Aufsicht eine Mehrfach-Anordnung der optischen Unterbaugruppe oder des optischen Sub-Assemblys (OSA) aus Fig. 11A und Fig. 11B mit über die jeweilige Erweiterung in den jeweiligen Führungskanal einsetzbarer optischer Faser oder Wellenleiter.

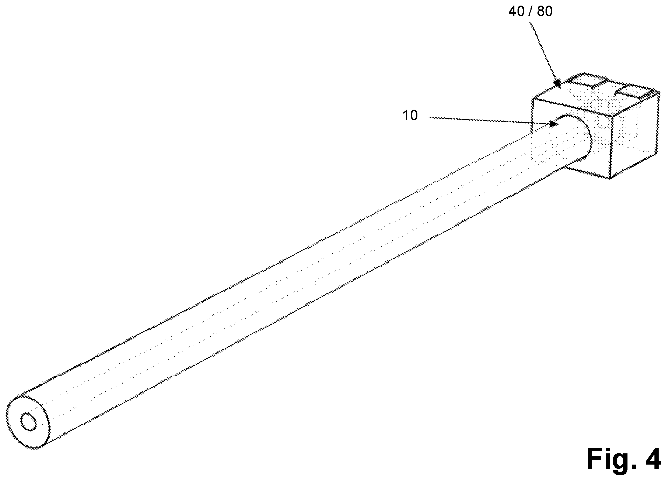

Gleiche oder ähnliche Ausgestaltungen, Elemente oder Merkmale sind in Fig. 4 bis Fig.11C mit identischen Bezugszeichen versehen. Hinsichtlich der Sendeseite und der Empfangsseite wird zeichnerisch nicht unterschieden, jedoch weisen die den sendeseitigen Elementen entsprechenden empfangsseitigen Elemente ein um 40 höheres Bezugszeichen auf.

### Bester Weg zur Ausführung der vorliegenden Erfindung

Zur Vermeidung überflüssiger Wiederholungen beziehen sich die nachfolgenden Erläuterungen hinsichtlich der Ausgestaltungen, Merkmale und Vorteile der vorliegenden Erfindung - soweit nicht anderweitig angegeben - auf alle sieben anhand Fig. 5A bis Fig. 11C veranschaulichten Ausführungsbeispiele der vorliegenden Erfindung.

Bei sendeseitiger Auslegung zeigen Fig. 5A bis Fig. 11C jeweils eine Vorrichtung 100a, 100b, 100c, 100d, 100e, 100f, 100g zum Einkoppeln optischer Signale in einen Wellenleiter 10. Die Vorrichtung 100a, 100b, 100c, 100d, 100e, 100f, 100g weist einen (nicht dargestellten) sendeseitigen Schaltkreis auf, der auf Basis von von sendeseitigen Anschlusskontakten eingehenden Signalen einen elektro-optischen Wandler 28 ansteuert, der die optischen Signale in Richtung der Achse 12 des Wellenleiters 10 aussendet.

Bei empfangsseitiger Auslegung zeigen Fig. 5A bis Fig. 11C jeweils eine Vorrichtung 140a, 140b, 140c, 140d, 140e, 140f, 140g zum Auskoppeln optischer Signale aus mindestens einem Wellenleiter 10 in einen opto-elektrischen Wandler 68, der die optischen Signale aus Richtung der Achse 12 des Wellenleiters 10 aufnimmt und als elektrische Signale an einen (nicht dargestellten) empfangsseitigen Schaltkreis übermittelt, der die eingehenden elektrischen Signale verarbeitet und an empfangsseitige Anschlusskontakte ausgibt.

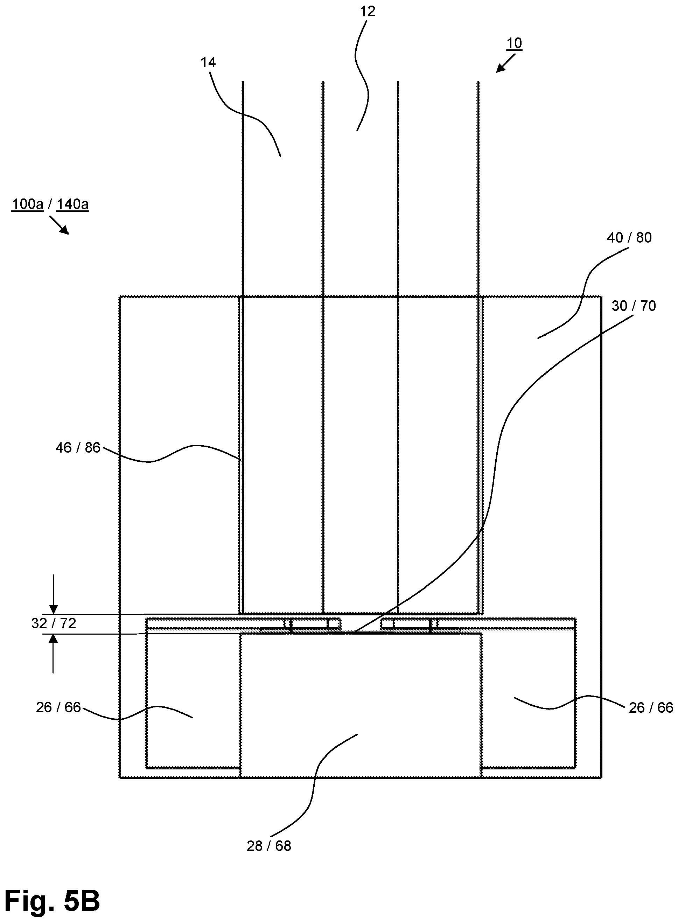

Erfindungsgemäß ist die Anordnung der Elemente in einer aus transparentem Polymer gefertigten optischen Unterbaugruppe oder in einem optischen Sub-Assembly 40 bzw. 80 dergestalt ausgebildet, dass die Kernfläche 12 der optischen Faser 10 auf der Austrittsöffnung 30 des Lasers 28 bzw. auf der aktiven Fläche 70 der Fotodiode 68 direkt aufsitzt bzw. sich in einem Abstand 32 von nur wenigen, zum Beispiel von etwa zwanzig, Mikrometern darüber befindet (vgl. erstes Ausführungsbeispiel gemäß Fig. 5A und Fig. 5B).

Die Anordnung der Elemente im optischen Sub-Assembly 40 bzw. 80 erfordert weder einen Umlenkspiegel noch eine Linse
- zur Ausrichtung des optischen Signals von der Austrittsöffnung 30 des Lasers 28 in die optische Faser 10 bzw.
- zur Ausrichtung des optischen Signals aus der optischen Faser 10 auf die aktive Fläche 70 der Fotodiode 68.

Die Anordnung der metallischen Kontaktierungen bzw. erfolgt vorteilhafterweise so, dass sie zum einen die, insbesondere als metallische Druckkontakte oder Schleifkontakte ausgebildeten, Anschlusskontakte 26 bzw. 66 des eingebetteten Wandlers 28 bzw. 68 elektrisch kontaktieren und zum anderen, aus dem Material des optischen Sub-Assemblys 40 bzw. 80 heraus kommend, auf einer zu den Anschlusskontakten 26 bzw. 66 des Wandlers 28 bzw. 68 um etwa neunzig Grad versetzten Seitenfläche der Außenfläche des optischen Sub-Assemblys 40 bzw. 80 aufliegen (vgl. Fig. 5A und Fig. 5B).

Die Formgebung des optischen Sub-Assemblys 40 bzw. 80 ist dergestalt, dass die optische Faser 10 mit ihrem optischen Kern 12 und mit ihrem den optischen Kern 12 vollständig umschließenden optischen Mantel 14 (vgl. Fig. 5B) in einem passgenauen zylindrischen Faserführungskanal 46 bzw. 86 des optischen Sub-Assemblys 40 bzw. 80 zur Austrittsöffnung 30 des elektro-optischen Wandlers 28 bzw. zur aktiven Fläche 70 des opto-elektrischen Wandlers 68 ausgerichtet ist.

Hierbei kann insbesondere der optische Kern 12 der optischen Faser 10 mittig über der Austrittsöffnung 30 des elektro-optischen Wandlers 28 bzw. mittig über der aktiven Fläche 70 des opto-elektrischen Wandlers 68 ausgerichtet sein (vgl. Fig. 5A und Fig. 5B).

Des Weiteren erlaubt es die Formgebung des optischen Sub-Assemblys 40 bzw. 80, dass die Kernfläche 12 der optischen Faser 10 auf der Austrittsöffnung 30 des Lasers 28 bzw. auf der aktiven Fläche 70 der Fotodiode 68 direkt aufsitzt bzw. sich in einem Abstand 32 von nur wenigen, zum Beispiel von etwa zwanzig, Mikrometern darüber befindet (vgl. erstes Ausführungsbeispiel gemäß Fig. 5A und Fig. 5B).

Durch die vorgenannten technischen Maßnahmen wird ein optisches Sub-Assembly 40 bzw. 80 mit einem Volumen von weniger als einem Kubikmillimeter ermöglicht.

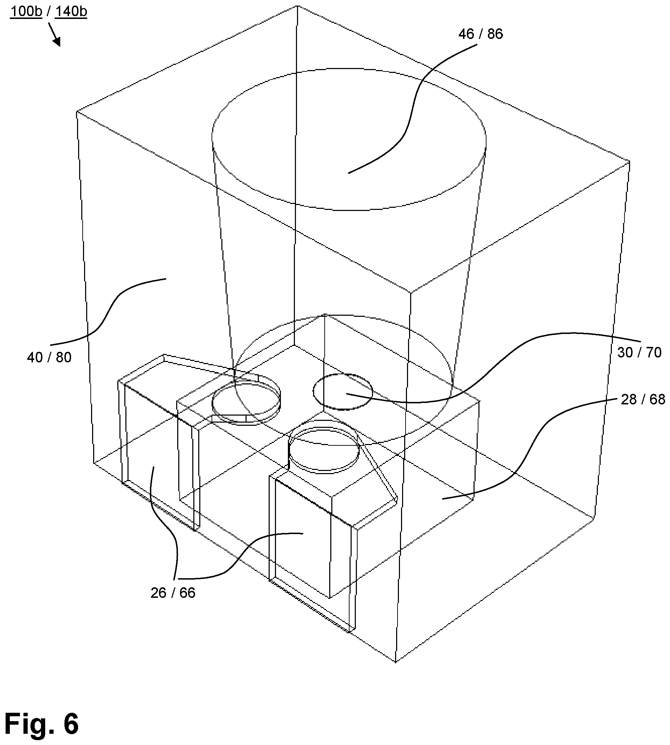

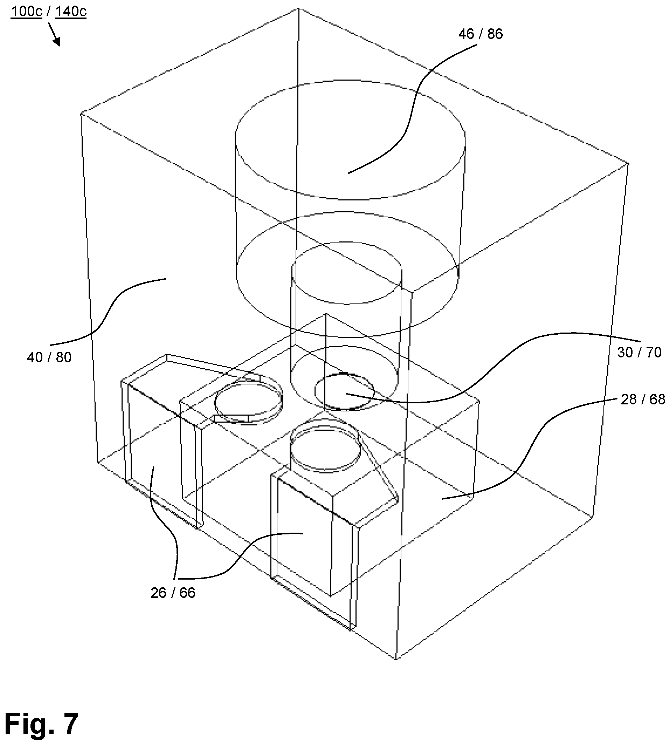

In weiteren Ausführungsbeispielen der vorliegenden Erfindung kann der (Faser-)Führungskanal 46 bzw. 86 im optischen Sub-Assembly 40 bzw. 80 für das vereinfachte und beschleunigte Einsetzen der optischen Faser 10 auch konisch auf den Wandler 28 bzw. 68 zulaufend (vgl. zweites Ausführungsbeispiel gemäß Fig. 6) oder mehrstufig (vgl. drittes Ausführungsbeispiel gemäß Fig. 7), insbesondere mit mindestens zwei verschiedenen zylindrischen Innendurchmessern, aufgebaut sein.

Da es während des Einsetzens der optischen Faser 10, insbesondere in den nicht-konischen Führungskanal 46 bzw. 86, zur Einschließung und Kompression von Luft kommen kann, können eine schlechte optische Kopplung und somit optische Verluste zwischen dem Wandler 28 bzw. 68 und der optischen Faser 10 auftreten.

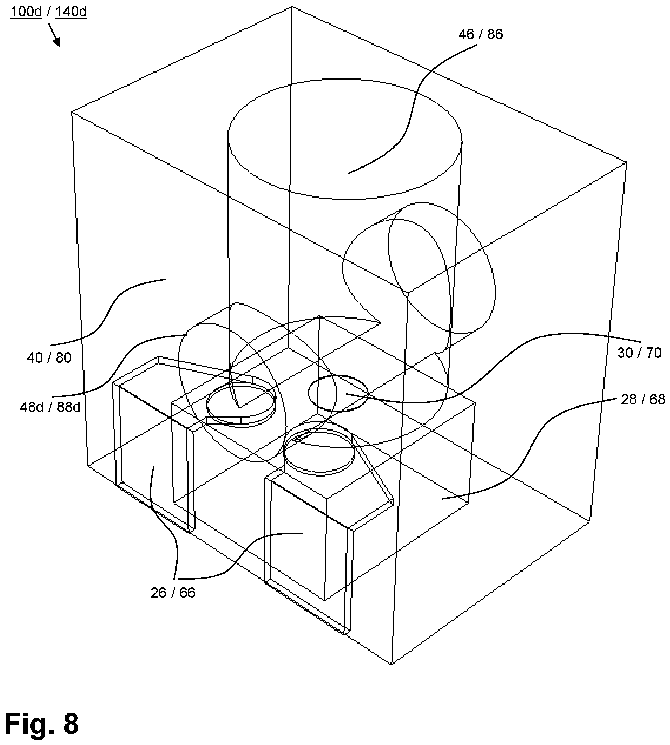

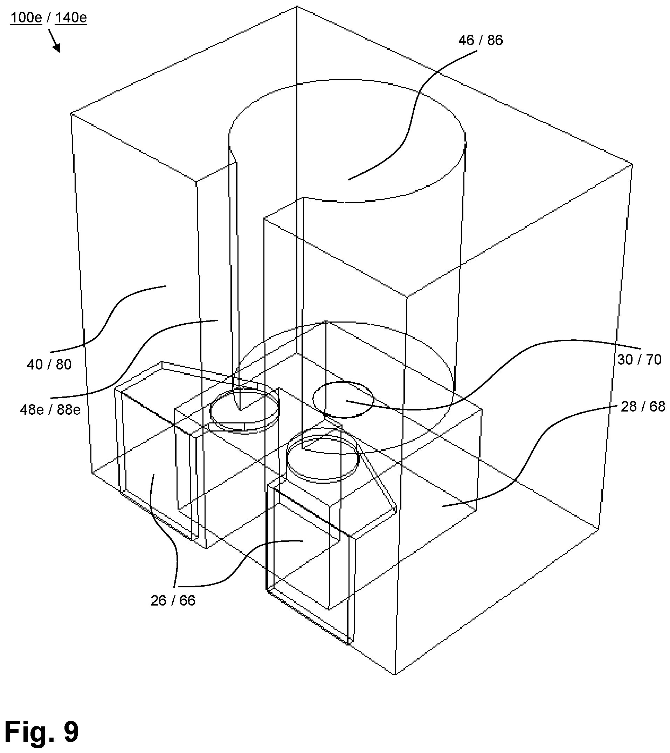

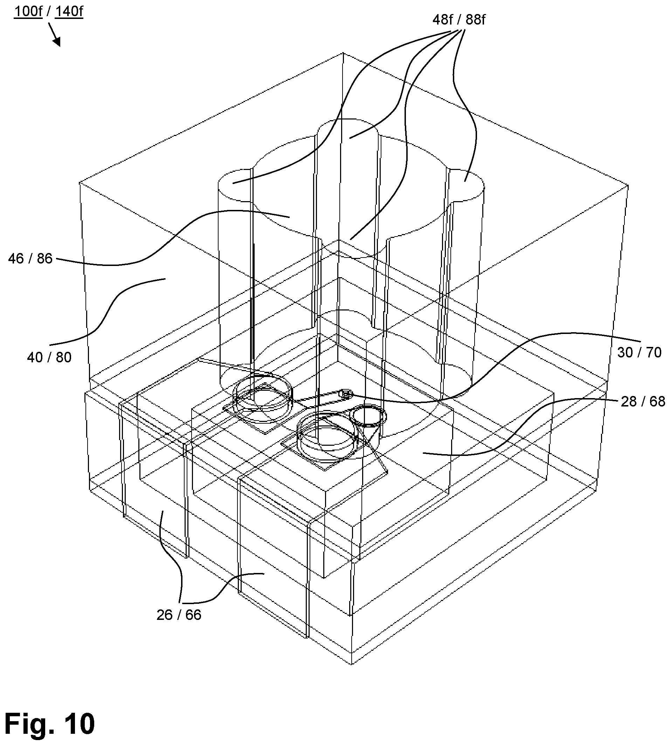

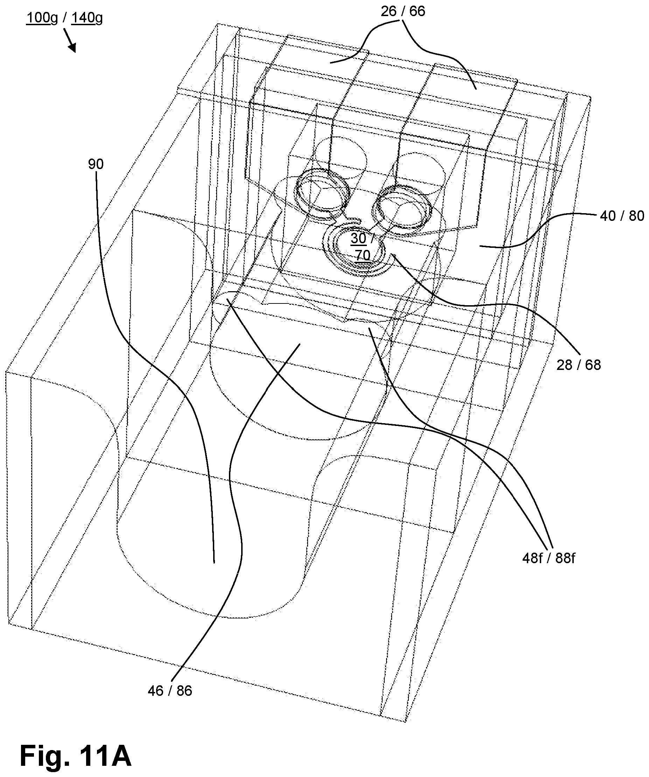

Mithin kann des Weiteren
- mindestens eine zum Beispiel seitlich angeordnete Luftaustrittsöffnung 48d bzw. 88d am dem Wandler 28 bzw. 68 zugewandten Ende des Führungskanals 46 bzw. 86 im optischen Sub-Assembly 40 bzw. 80, wobei die axiale Erstreckung der Luftaustrittsöffnung 48d bzw. 88d quer, insbesondere im Wesentlichen senkrecht, zur Richtung der Achse oder des Kerns 12 des Wellenleiters 10 verläuft (vgl. viertes Ausführungsbeispiel gemäß Fig. 8),
- mindestens eine sich lateral oder seitlich, insbesondere über die gesamte Länge des optischen Sub-Assemblys 40 bzw. 80, zum Beispiel über die gesamte Länge des Führungskanals 46 bzw. 86, erstreckende Luftaustrittsöffnungsnut 48e bzw. 88e (vgl. fünftes Ausführungsbeispiel gemäß Fig. 9) oder
- mindestens ein sich lateral oder seitlich, insbesondere über die gesamte Länge des optischen Sub-Assemblys 40 bzw. 80, zum Beispiel über die gesamte Länge des Führungskanals 46 bzw. 86, erstreckender Luftaustrittsöffnungskanal 48f bzw. 88f,
   -- wobei die exemplarisch vier Luftaustrittsöffnungskanäle 48f bzw. 88f gleichverteilt und symmetrisch um den zylindrischen Führungskanal 46 bzw. 86 herum angeordnet sein können (vgl. sechstes Ausführungsbeispiel gemäß Fig. 10) oder
   -- wobei die exemplarisch zwei Luftaustrittsöffnungskanäle 48f bzw. 88f auf einer Seite des zylindrischen Führungskanals 46 bzw. 86 angeordnet sein können, also nur in demjenigen Bereich des Führungskanals 46 bzw. 86, der nicht auf die Erweiterung 90 trifft (vgl. siebtes Ausführungsbeispiel gemäß Fig. 11A bis Fig. 11C),
vorgesehen sein, um eine gleichmäßige, zuverlässige und vollständige Ableitung der beim Einsetzen des Wellenleiters 10 in den Führungskanal 46 bzw. 86 eingeschlossenen und komprimierten Luft zu gewährleisten.

Allen sieben Ausführungsbeispielen gemäß Fig. 5A bis Fig. 11C ist gemeinsam, dass die Wandler 28 bzw. 68 so in der optischen Unterbaugruppe oder im optischen Sub-Assembly 40 bzw. 80 angeordnet sind, dass ihre Sende- bzw. Empfangsrichtung der der Ebene der optischen Faser oder des Wellenleiters 10 entspricht (vgl. hierzu auch die Übersichtsdarstellung gemäß Fig. 4).

Diese technische Lösung verbindet die optische Faser 10 in sehr kosteneffizienter Weise mit dem Wandler 28 bzw. 68. Um bei diesem Aufbau gute Resultate beim Einkoppeln von Licht vom elektro-optischen Wandler 28 in die optische Faser 10 bzw. beim Auskoppeln von Licht aus der optischen Faser 10 in den opto-elektrischen Wandler 68 zu erzielen, ist der Innendurchmesser des Führungskanals 46 bzw. 86 nur unwesentlich größer als der Außendurchmesser der optischen Faser 10. Der Unterschied dieser beiden Durchmesser ist typischerweise kleiner oder gleich etwa zehn Mikrometern.

Hierbei lässt sich das Einführen der optischen Faser 10 in den Führungskanal 46 bzw. 86 durch eine der optischen Unterbaugruppe oder dem optischen Sub-Assembly 40 bzw. 80, insbesondere dem Führungskanal 46 bzw. 86, zuordbare zusätzliche, speziell geformte nut- oder trog- oder wannenförmige Erweiterung 90, insbesondere durch einen Wellenleitertrog oder durch eine Faserwanne, automatisieren.

Obwohl nur für das siebte Ausführungsbeispiel (vgl. Fig. 11A bis Fig. 11C) explizit dargestellt, ist diese Erweiterung 90 auch jeweils dem ersten Ausführungsbeispiel (vgl. Fig. 5A und Fig. 5C) bis sechsten Ausführungsbeispiel (vgl. Fig. 10) zugeordnet, das heißt dem vom Wandler 28 bzw. 68 abgewandten Ende des Führungskanals 46 bzw. 86 so vorgeschaltet, dass ein nahtloser und stufenloser Übergang in den Führungskanal 46 bzw. 86 gegeben ist.

Die Formgebung und Dimensionierung (des Bodens) der Erweiterung 90 ist hierbei an die Formgebung und Dimensionierung (der entsprechenden Umfangslinie) des Führungskanals 46 bzw. 86 angepasst; zum Beispiel kann der Boden der Erweiterung 90 also kreisrund geformt sein. Diese kreisrunde Formung weist den gleichen Durchmesser wie der eigentliche Führungskanal 46 bzw. 86 auf.

Durch ein nahtloses und absatzloses Anschließen der Erweiterung 90 an den Führungskanal 46 bzw. 86 wird ermöglicht, dass eine in die Erweiterung 90 eingelegte optische Faser 10 durch einfaches Vorwärtsschieben präzise in den Führungskanal 46 bzw. 86 gleitet.

Der rundum geschlossene Führungskanal 46 bzw. 86 hält das Ende der optischen Faser 10 in einer exakt ausgerichteten Position zum im optischen Sub-Assembly 40 bzw. 80 eingebetteten Wandler 28 bzw. 68, ohne dass zusätzliche Fixiermaßnahmen, wie beispielsweise Klebstoff, notwendig sind.

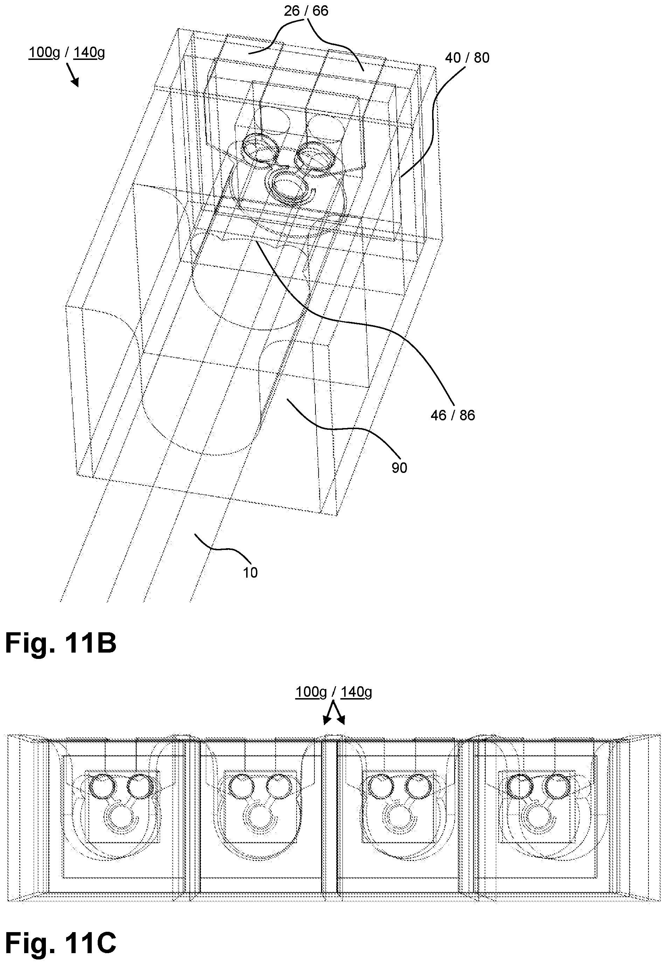

Mit der Erweiterung 90 und dem im optischen Sub-Assembly 40 bzw. 80 enthaltenen Führungskanal 46 bzw. 86 entsteht ein neuartiges Faserausrichtungselement, mittels dessen es möglich ist, die Faser 10 maschinell sowie automatisch und kostengünstig in den Faserführungskanal einzuführen. Hierbei zeigt Fig. 11B die vollständig eingeführte und ausgerichtete Faser 10 im optischen Sub-Assembly 40 bzw. 80 mit dem Faserausrichtungselement gemäß der vorliegenden Erfindung.

Dieses neuartige Faserausrichtungselement ermöglicht es, die Ungenauigkeiten von kostengünstigen Platzierungsautomaten oder von kostengünstigen Platzierungsmaschinen mit den Anforderungen an eine präzise Ausrichtung der optischen Achse des Wandlers 28 bzw. 68 zur optischen Achse einer optischen Faser 10 zu verknüpfen.

Durch die Erweiterung 90 ist ein einfaches sowie toleranzbehaftetes Einlegen der optischen Faser 10 möglich. Sobald die optische Faser 10 auf dem Boden der Erweiterung 90 aufliegt, reicht ein Vorwärtsschieben der Faser 10 hinein in den Führungskanal 46 bzw. 86 aus, um die optische Kopplung zwischen dem im OSA 40 bzw. 80 eingebetteten Wandler 28 bzw. 68 und der optischen Faser 10 zu erreichen.

Wie anhand Fig. 11C veranschaulicht, lässt sich die vorliegende Erfindung auch in Form einer Mehrkanalanordnung realisieren, die mehrere, in Fig. 11C exemplarisch vier im Wesentlichen parallel zueinander angeordnete Führungskanäle 46 bzw. 86 mit jeweils vorgeschalteter nut- oder trog- oder wannenartiger Erweiterung 90, insbesondere mit jeweils vorgeschaltetem Wellenleitertrog oder mit jeweils vorgeschalteter Faserwanne, aufweist.

### Bezugszeichenliste

- 10: Wellenleiter, insbesondere optische Faser
- 12: axiale Richtung des Wellenleiters 10, insbesondere Kern der optischen Faser
- 14: optischer Mantel des Wellenleiters 10
- 26: elektrische, insbesondere auf einer Seitenfläche der sendeseitigen optischen Unterbaugruppe 40 aufliegende, Kontaktierung für elektro-optischen Wandler 28
- 28: elektro-optischer Wandler, insbesondere aktiv-optische Sendeeinheit, zum Beispiel Laser, wie etwa Vertical Cavity Surface Emitting Laser (VCSEL)
- 30: Austrittsöffnung oder aktive Fläche des elektro-optischen Wandlers 28
- 32: Abstand zwischen Austrittsöffnung oder aktiver Fläche 30 des elektro-optischen Wandlers 28 und Kernfläche des Kerns 12 des Wellenleiters 10
- 40: sendeseitige optische Unterbaugruppe, insbesondere sendeseitiges optisches Sub-Assembly
- 46: sendeseitiger Führungskanal
- 48d: Luftaustrittsöffnung, insbesondere in die optische Unterbaugruppe 40 eingebrachter Durchlass, zum Beispiel am dem Wandler 28 zugewandten Ende des Führungskanals 46 quer, wie etwa im Wesentlichen senkrecht, zur Richtung der Achse oder des Kerns 12 des Wellenleiters 10 verlaufende Bohrung (= viertes Ausführungsbeispiel; vgl. Fig. 8)
- 48e: Luftaustrittsöffnung, insbesondere Luftaustrittsnut oder nutförmige Luftaustrittsöffnung (= fünftes Ausführungsbeispiel; vgl. Fig. 9)
- 48f: Luftaustrittsöffnung, insbesondere Luftaustrittskanal oder kanalförmige Luftaustrittsöffnung (= sechstes bzw. siebtes Ausführungsbeispiel; vgl. Fig. 10 bzw. Fig. 11A bis Fig. 11C)
- 66: elektrische, insbesondere auf einer Seitenfläche der empfangsseitigen optischen Unterbaugruppe 80 aufliegende, Kontaktierung für opto-elektrischen Wandler 68
- 68: opto-elektrischer Wandler, insbesondere aktiv-optische Empfangseinheit, zum Beispiel Diode, wie etwa Fotodiode (PD)
- 70: Eintrittsöffnung oder aktive Fläche des opto-elektrischen Wandlers 68
- 72: Abstand zwischen Kern 12 des Wellenleiters 10 und Eintrittsöffnung oder aktiver Fläche 70 des opto-elektrischen Wandlers 68
- 80: empfangsseitige optische Unterbaugruppe, insbesondere empfangsseitiges optisches Sub-Assembly
- 86: empfangsseitiger Führungskanal
- 88d: Luftaustrittsöffnung, insbesondere in die optische Unterbaugruppe 80 eingebrachter Durchlass, zum Beispiel am dem Wandler 68 zugewandten Ende des Führungskanals 86 quer, wie etwa im Wesentlichen senkrecht, zur Richtung der Achse oder des Kerns 12 des Wellenleiters 10 verlaufende Bohrung (= viertes Ausführungsbeispiel; vgl. Fig. 8)
- 88e: Luftaustrittsöffnung, insbesondere Luftaustrittsnut oder nutförmige Luftaustrittsöffnung (= fünftes Ausführungsbeispiel; vgl. Fig. 9)
- 88f: Luftaustrittsöffnung, insbesondere Luftaustrittskanal oder kanalförmige Luftaustrittsöffnung (= sechstes bzw. siebtes Ausführungsbeispiel; vgl. Fig. 10 bzw. Fig. 11A bis Fig. 11C)
- 90: Erweiterung, insbesondere nut- oder trog- oder wannenförmige Erweiterung, zum Beispiel Wellenleitertrog oder Faserwanne
- 100a: sendeseitige Vorrichtung (= erstes Ausführungsbeispiel; vgl. Fig. 5A und Fig. 5B)
- 100b: sendeseitige Vorrichtung (= zweites Ausführungsbeispiel; vgl. Fig. 6)
- 100c: sendeseitige Vorrichtung (= drittes Ausführungsbeispiel; vgl. Fig. 7)
- 100d: sendeseitige Vorrichtung (= viertes Ausführungsbeispiel; vgl. Fig. 8)
- 100e: sendeseitige Vorrichtung (= fünftes Ausführungsbeispiel; vgl. Fig. 9)
- 100f: sendeseitige Vorrichtung (= sechstes Ausführungsbeispiel; vgl. Fig. 10)
- 100g: sendeseitige Vorrichtung (= siebtes Ausführungsbeispiel; vgl. Fig. 11A bis Fig. 11C)
- 140a: empfangsseitige Vorrichtung (= erstes Ausführungsbeispiel; vgl. Fig. 5A und Fig. 5B)
- 140b: empfangsseitige Vorrichtung (= zweites Ausführungsbeispiel; vgl. Fig. 6)
- 140c: empfangsseitige Vorrichtung (= drittes Ausführungsbeispiel; vgl. Fig. 7)
- 140d: empfangsseitige Vorrichtung (= viertes Ausführungsbeispiel; vgl. Fig. 8)
- 140e: empfangsseitige Vorrichtung (= fünftes Ausführungsbeispiel; vgl. Fig. 9)
- 140f: empfangsseitige Vorrichtung (= sechstes Ausführungsbeispiel; vgl. Fig. 10)
- 140g: empfangsseitige Vorrichtung (= siebtes Ausführungsbeispiel; vgl. Fig. 11A bis Fig. 11C)
- ASIC: Schaltkreis, insbesondere anwendungsspezifische integrierte Schaltung oder Application-Specific Integrated Circuit (ASIC), zum Beispiel custom chip (= Stand der Technik; vgl. Fig. 1 und Fig. 2A)
- HA: Halterung (= Stand der Technik; vgl. Fig. 2A)
- SI: optisches Signal (= Stand der Technik; vgl. Fig. 1 und Fig. 2A)
- US: Umlenkspiegel (= Stand der Technik; vgl. Fig. 1)
- WA: optischer Wandler (= Stand der Technik; vgl. Fig. 1 und Fig. 2A)
- WL: optischer Wellenleiter (= Stand der Technik; vgl. Fig. 1 und Fig. 2A)

## Patentansprüche

1. Vorrichtung (100a, 100b, 100c, 100d, 100e, 100f, 100g) zum Einkoppeln optischer Signale in mindestens einen Wellenleiter (10) mit mindestens einem elektro-optischen Wandler (28), der die optischen Signale in Richtung der Achse oder des Kerns (12) des Wellenleiters (10) aussendet,
- wobei der elektro-optische Wandler (28) in mindestens einer sendeseitigen optischen Unterbaugruppe (40) aufgenommen ist,
- wobei die sendeseitige optische Unterbaugruppe (40) mindestens einen Führungskanal (46) zum Ausrichten des Wellenleiters (10) in Bezug auf die Austrittsöffnung oder aktive Fläche (30) des elektro-optischen Wandlers (28) aufweist,
**dadurch gekennzeichnet, dass** dem vom elektro-optischen Wandler (28) abgewandten Ende des Führungskanals (46) mindestens eine Erweiterung (90) zum Ausrichten des Wellenleiters (10) in Bezug auf den Führungskanal (46) so vorgeschaltet ist, dass ein stufenloser Übergang in den Führungskanal (46) definiert ist.

2. Vorrichtung (140a, 140b, 140c, 140d, 140e, 140f, 140g) zum Auskoppeln optischer Signale aus mindestens einem Wellenleiter (10) mit mindestens einem opto-elektrischen Wandler (68), der die optischen Signale aus Richtung der Achse oder des Kerns (12) des Wellenleiters (10) aufnimmt,
- wobei der opto-elektrische Wandler (68) in mindestens einer empfangsseitigen optischen Unterbaugruppe (80) aufgenommen ist,
- wobei die empfangsseitige optische Unterbaugruppe (80) mindestens einen Führungskanal (86) zum Ausrichten des Wellenleiters (10) in Bezug auf die Eintrittsöffnung oder aktive Fläche (70) des elektro-optischen Wandlers (68) aufweist,
**dadurch gekennzeichnet, dass** dem vom opto-elektrischen Wandler (68) abgewandten Ende des Führungskanals (86) mindestens eine Erweiterung (90) zum Ausrichten des Wellenleiters (10) in Bezug auf den Führungskanal (86) so vorgeschaltet ist, dass ein stufenloser Übergang in den Führungskanal (86) definiert ist.

3. Vorrichtung gemäß Anspruch 1 oder 2, **dadurch gekennzeichnet, dass** die Erweiterung (90) nut- oder trog- oder wannenförmig ausgebildet ist.

4. Vorrichtung gemäß mindestens einem der Ansprüche 1 bis 3, **dadurch gekennzeichnet, dass** die Form und/oder die Dimensionierung der Erweiterung (90), insbesondere des Bereichs der Erweiterung (90), in dem der Wellenleiter (10) zum Aufliegen kommt, an die Form und/oder an die Dimensionierung des Führungskanals (46; 86), insbesondere des entsprechenden Bereichs des Führungskanals (46; 86), angepasst ist.

5. Vorrichtung gemäß mindestens einem der Ansprüche 1 bis 4, **dadurch gekennzeichnet, dass** der Wandler (28; 68) in der optischen Unterbaugruppe (40; 80) eingebettet ist.

6. Vorrichtung gemäß mindestens einem der Ansprüche 1 bis 5, **dadurch gekennzeichnet, dass** die Erweiterung (90) aus mindestens einem optisch transparenten oder optisch teiltransparenten Medium, insbesondere aus mindestens einem Polymer, gefertigt ist.

7. Vorrichtung gemäß mindestens einem der Ansprüche 1 bis 6, **gekennzeichnet durch** mindestens eine Luftaustrittsöffnung (48d, 48e, 48f; 88d, 88e, 88f), mittels derer beim Einsetzen des Wellenleiters (10) in den Führungskanal (46; 86) eingeschlossene und/oder komprimierte Luft ableitbar ist.

8. Vorrichtung gemäß Anspruch 7, **dadurch gekennzeichnet, dass** die Luftaustrittsöffnung (48e, 48f; 88e, 88f) nutförmig oder kanalförmig ausgebildet ist.

9. Vorrichtung gemäß Anspruch 7 oder 8, **dadurch gekennzeichnet, dass** sich die Luftaustrittsöffnung (48e, 48f; 88e, 88f) entlang dem Führungskanal (46; 86) erstreckt.

10. Vorrichtung gemäß Anspruch 9, **dadurch gekennzeichnet, dass** sich die Luftaustrittsöffnung (48e, 48f; 88e, 88f) entlang dem Führungskanal (46; 86) über dessen gesamte Länge erstreckt.

11. Vorrichtung gemäß mindestens einem der Ansprüche 8 7 bis 10, **dadurch gekennzeichnet, dass** die Luftaustrittsöffnung (48e, 48f; 88e, 88f) nur in demjenigen Bereich des Führungskanals (46; 86) vorgesehen ist, der nicht auf die Erweiterung (90) trifft.

12. Vorrichtung gemäß mindestens einem der Ansprüche 1 bis 11, **gekennzeichnet durch** mindestens zwei im Wesentlichen parallel zueinander angeordnete Führungskanäle (46; 86) mit jeweils vorgeschalteter Erweiterung (90).

13. Vorrichtung gemäß mindestens einem der Ansprüche 1 bis 12, **dadurch gekennzeichnet,**
- **dass** der elektro-optische Wandler (28) mindestens ein Laser, insbesondere mindestens ein Vertical Cavity Surface Emitting Laser (VCSEL), ist und/oder
- **dass** der opto-elektrische Wandler (68) mindestens eine Diode, insbesondere mindestens eine Fotodiode (PD), ist.

14. Dreidimensionales mikro-stereolithografisches Druckverfahren zum Herstellen mindestens einer Vorrichtung (100a, 100b, 100c, 100d, 100e, 100f, 100g; 140a, 140b, 140c, 140d, 140e, 140f, 140g) gemäß mindestens einem der Ansprüche 1 bis 13.

15. Verwendung mindestens einer Vorrichtung (100a, 100b, 100c, 100d, 100e, 100f, 100g; 140a, 140b, 140c, 140d, 140e, 140f, 140g) gemäß mindestens einem der Ansprüche 1 bis 13 zum Aufbau mindestens eines, insbesondere steckbaren, aktiven optischen Kabels.

## Claims

1. A device (100a, 100b, 100c, 100d, 100e, 100f, 100g) for incoupling optical signals into at least one waveguide (10), said device (100a, 100b, 100c, 100d, 100e, 100f, 100g) comprising at least one electro-optical converter (28) which sends out the optical signals in the direction of the axis or of the core (12) of the waveguide (10),
- wherein the electro-optical converter (28) is received in at least one send-site optical sub-assembly (40),
- wherein the send-site optical sub-assembly (40) comprises at least one guiding channel (46) for aligning the waveguide (10) in relation to the outlet opening or active surface (30) of the electro-optical converter (28),
**characterized in that** the end of the guiding channel (46) averted from the electro-optical converter (28) is preceded by at least one extension (90) for aligning the waveguide (10) in relation to the guiding channel (46) in such a way that a stepless transition into the guiding channel (46) is defined.

2. A device (140a, 140b, 140c, 140d, 140e, 140f, 140g) for outcoupling optical signals from at least one waveguide (10), said device (140a, 140b, 140c, 140d, 140e, 140f, 140g) comprising at least one opto-electrical converter (68) which receives the optical signals from the direction of the axis or of the core (12) of the waveguide (10),
- wherein the opto-electrical converter (68) is received in at least one receive-site optical sub-assembly (80),
- wherein the receive-site optical sub-assembly (80) comprises at least one guiding channel (86) for aligning the waveguide (10) in relation to the inlet opening or active surface (70) of the opto-electrical converter (68),
**characterized in that** the end of the guiding channel (86) averted from the opto-electrical converter (68) is preceded by at least one extension (90) for aligning the waveguide (10) in relation to the guiding channel (86) in such a way that a stepless transition into the guiding channel (86) is defined.

3. The device according to claim 1 or 2, **characterized in that** the extension (90) is groove-shaped or trough-shaped or sag-shaped.

4. The device according to at least one of claims 1 to 3, **characterized in that** the shape and/or the dimensioning of the extension (90), in particular of the area of the extension (90) in which the waveguide (10) comes to rest, is adapted to the shape and/or to the dimensioning of the guiding channel (46; 86), in particular of the corresponding area of the guiding channel (46; 86).

5. The device according to at least one of claims 1 to 3, **characterized in that** the converter (28; 68) is embedded in the optical sub-assembly (40; 80).

6. The device according to at least one of claims 1 to 5, **characterized in that** the extension (90) is made of at least one optically transparent or optically partially transparent medium, in particular of at least one polymer.

7. The device according to at least one of claims 1 to 6, **characterized by** at least one air outlet opening (48d, 48e, 48f; 88d, 88e, 88f) by means of which trapped and/or compressed air can be discharged when the waveguide (10) is inserted into the guiding channel (46; 86).

8. The device according to claim 7, **characterized in that** the air outlet opening (48e, 48f; 88e, 88f) is groove-shaped or channel-shaped.

9. The device according to claim 7 or 8, **characterized in that** the air outlet opening (48e, 48f; 88e, 88f) extends along the guiding channel (46; 86).

10. The device according to claim 9, **characterized in that** the air outlet opening (48e, 48f; 88e, 88f) extends along the guiding channel (46; 86) over its entire length.

11. The device according to at least one of claims 7 to 10, **characterized in that** the air outlet opening (48e, 48f; 88e, 88f) is provided only in the area of the guiding channel (46; 86) which does not encounter the extension (90).

12. The device according to at least one of claims 1 to 11, **characterized by** at least two guiding channels (46; 86) arranged substantially parallel to one another, each with an extension (90) upstream.

13. The device according to at least one of claims 1 to 12, **characterized in**
- **that** the electro-optical converter (28) is at least one laser, in particular at least one vertical cavity surface emitting laser (VCSEL), and/or
- **that** opto-electrical converter (68) is at least one diode, in particular at least one photo diode (PD).

14. A three-dimensional micro-stereolithographic printing method for producing at least one device (100a, 100b, 100c, 100d, 100e, 100f, 100g; 140a, 140b, 140c, 140d, 140e, 140f, 140g) according to at least one of claims 1 to 13.

15. Use of at least one device (100a, 100b, 100c, 100d, 100e, 100f, 100g; 140a, 140b, 140c, 140d, 140e, 140f, 140g) according to at least one of claims 1 to 13 for forming at least one, in particular pluggable, active optical cable.

## Revendications

1. Dispositif (100a, 100b, 100c, 100d, 100e, 100f, 100g) pour coupler des signaux optiques dans au moins un guide d'ondes (10), lequel dispositif (100a, 100b, 100c, 100d, 100e, 100f, 100g) comportant au moins un convertisseur électro-optique (28) émettant les signaux optiques en direction de l'axe ou du cœur (12) du guide d'ondes (10),
- le convertisseur électro-optique (28) étant logé dans au moins un sous-ensemble optique côté émission (40),
- le sous-ensemble optique côté émission (40) comportant au moins un canal de guidage (46) destiné à l'alignement du guide d'ondes (10) par rapport à l'orifice de sortie ou à la face active (30) du convertisseur électro-optique (28),
**caractérisé en ce qu'**au moins un élargissement (90) destiné à l'alignement du guide d'ondes (10) par rapport au canal de guidage (46) est connecté en amont de l'extrémité du canal de guidage (46) évitée du convertisseur électro-optique (28) de telle manière qu'une transition continue vers le canal de guidage (46) est définie.

2. Dispositif (140a, 140b, 140c, 140d, 140e, 140f, 140g) pour coupler des signaux optiques provenant d'au moins un guide d'ondes (10), lequel dispositif (140a, 140b, 140c, 140d, 140e, 140f, 140g) comportant au moins un convertisseur opto-électrique (68) recevant les signaux optiques de la direction de l'axe ou du cœur (12) du guide d'ondes (10),
- le convertisseur opto-électrique (68) étant logé dans au moins un sous-ensemble optique côté réception (80),
- le sous-ensemble optique côté réception (80) comportant au moins un canal de guidage (86) destiné à l'alignement du guide d'ondes (10) par rapport à l'orifice d'entrée ou à la face active (70) du convertisseur opto-électrique (68),
**caractérisé en ce qu'**au moins un élargissement (90) destiné à l'alignement du guide d'ondes (10) par rapport au canal de guidage (86) est connecté en amont de l'extrémité du canal de guidage (86) évitée du convertisseur opto-électrique (68) de telle manière qu'une transition continue vers le canal de guidage (86) est définie.

3. Dispositif selon la revendication 1 ou 2, **caractérisé en ce que** l'élargissement (90) est conçu sous la forme d'une rainure ou d'une auge ou d'une baignoire.

4. Dispositif selon au moins l'une des revendications 1 à 3, **caractérisé en ce que** fa forme et/ou le dimensionnement de l'élargissement (90), en particulier de la zone de l'élargissement (90) dans laquelle le guide d'ondes (10) vient se poser, est adapté à la forme et/ou au dimensionnement du canal de guidage (46 ; 86), en particulier de la zone correspondante du canal de guidage (46 ; 86).

5. Dispositif selon au moins l'une des revendications 1 à 4, **caractérisé en ce que** le convertisseur (28 ; 68) est intégré dans le sous-ensemble optique (40 ; 80).

6. Dispositif selon au moins l'une des revendications 1 à 5, **caractérisé en ce que** l'élargissement (90) est fabriqué d'au moins un support optiquement transparent ou optiquement partiellement transparent, en particulier d'au moins un polymère.

7. Dispositif selon au moins l'une des revendications 1 à 6, **caractérisé par** au moins une ouverture de sortie d'air (48d, 48e, 48f ; 88d, 88e, 88f), au moyen de laquelle l'air piégé et/ou comprimé peut être évacué lorsque le guide d'ondes (10) est inséré dans le canal de guidage (46 ; 86).

8. Dispositif selon la revendication 7, **caractérisé en ce que** l'ouverture de sortie d'air (48e, 48f ; 88e, 88f) est conçue sous la forme d'une rainure ou d'un canal.

9. Dispositif selon la revendication 7 ou 8, **caractérisé en ce que** l'ouverture de sortie d'air (48e, 48f ; 88e, 88f) s'étend le long du canal de guidage (46 ; 86).

10. Dispositif selon la revendication 9, **caractérisé en ce que** l'ouverture de sortie d'air (48e, 48f ; 88e, 88f) s'étend le long du canal de guidage (46 ; 86) sur toute sa longueur.

11. Dispositif selon au moins l'une des revendications 7 à 10, **caractérisé en ce que** l'ouverture de sortie d'air (48e, 48f ; 88e, 88f) n'est prévue que dans la zone du canal de guidage (46 ; 86) qui ne correspond pas à l'élargissement (90).

12. Dispositif selon au moins l'une des revendications 1 à 11, **caractérisé par** au moins deux canaux de guidage (46 ; 86) disposés sensiblement parallèlement l'un à l'autre, chacun avec un élargissement (90) en amont.

13. Dispositif selon au moins l'une des revendications 1 à 12, **caractérisé en ce**
- **que** le convertisseur électro-optique (28) est au moins un laser, en particulier au moins un laser à émission de surface à cavité verticale (VCSEL), et/ou
- **que** le convertisseur opto-électrique (68) est au moins une diode, en particulier au moins une photodiode (PD).

14. Procédé d'impression micro-stéréolithographique tridimensionnelle pour fabriquer d'au moins un dispositif (100a, 100b, 100c, 100d, 100e, 100f, 100g ; 140a, 140b, 140c, 140d, 140e, 140f, 140g) selon au moins l'une des revendications 1 à 13.

15. Utilisation d'au moins un dispositif (100a, 100b, 100c, 100d, 100e, 100f, 100g ; 140a, 140b, 140c, 140d, 140e, 140f, 140g) selon au moins l'une des revendications 1 à 13 pour la construction d'au moins un câble optique actif, en particulier enfichable.
